# EUROPEAN PATENT SPECIFICATION

(11) **EP 1 961 611 B1**
(45) Date of publication and mention of the grant of the patent: **15.01.2014**
(21) Application number: 08151264.2
(22) Date of filing: 11.02.2008
(51) Int. Cl.: B60P 3/20, F25D 17/06

(54) **Transportation refrigeration unit**
Transportkühleinheit
Unité de réfrigération de transport

(30) Priority: 22.02.2007 JP 2007042320
(43) Date of publication of application: 27.08.2008
(73) Proprietor: MITSUBISHI HEAVY INDUSTRIES, LTD., Tokyo 108-8215 (JP)
(72) Inventor: Ohata, Yohei, Kiyosu, Aichi-ken 452-8561 (JP); Kai, Masakazu, Kiyosu, Aichi-ken 452-8561 (JP); Osada, Kazumi, Kiyosu, Aichi-ken 452-8561 (JP)
(74) Representative: Cardy, Sophie Marie

(56) References cited:
- WO-A1-00/65288
- DE-A1- 10 156 481
- DE-A1- 10 215 272
- DE-A1- 19 502 137
- JP-A- 2006 029 664
- US-A- 2 791 401

## Description

### BACKGROUND OF THE INVENTION

### 1. FIELD OF THE INVENTION

The present invention relates to a transportation refrigeration unit mounted on a refrigeration container, a refrigeration compartment in a refrigeration vehicle and the like.

### 2. DESCRIPTION OF RELATED ART

Various types of transportation refrigeration systems to be mounted on a refrigeration container and a cooling compartment for a refrigeration vehicle are known. The refrigeration unit (cooling unit or evaporator unit) disposed inside the cooling compartment while being suspended from the ceiling surface of the cooling compartment may be one of the aforementioned systems (as disclosed in Japanese Unexamined Utility Model Application, Publication No. H6-53292 and Japanese Unexamined Patent Application, Publication No. 2001-82858). The refrigeration unit of the aforementioned type is required to have the unit structure as thin as possible so as to minimize reduction in the cargo loading efficiency.

Japanese Unexamined Patent Application, Publication No. 2001-82858 discloses an exemplary unit with the air passage structure where air is sucked at the lower surface and blown from the front surface, in which an air suction port to the blower fan is formed on the lower surface of the unit body, the blower fan is provided to rotate around the vertical axis opposite the air suction port, and the evaporator is disposed downstream of the blower fan such that the cooled air is blown from the front surface of the unit, thus making sure to feed the required flow rate of air in the dimensionally limited thin structure. The aforementioned air passage structure has been generally employed for the refrigeration unit to be suspended from the ceiling surface.

The aforementioned air passage structure has the following disadvantages.
(1) Upon refrigeration transportation, when the door of the cooling compartment is opened and closed (for unloading the cargo), water content of outside air which has entered into the compartment is rapidly cooled into the tiny ice crystals floating inside the compartment. Meanwhile, the air suction port of the refrigeration unit is provided with a fan guard (suction grille) serving as the air suction resistance with relatively fine screen or clearance to keep out the foreign matters, hands or fingers of the operator. Upon suction into the refrigeration unit, the ice crystals contained in air impinge on the fan guard to be adhered thereto. They are frosted and grow to an accumulation of ice. As the frost reduces the opening of the air suction port or partially seals the air suction port, the flow rate of air is reduced, thus deteriorating the performance or capability. This may cause the cooling failure.
(2) The above deposited frost is partially melted when the evaporator and the drain pan are defrosted. The thus liquefied water drops from the air suction port down to the cargo, which may deteriorate the cargo quality or damage the cargo.
(3) The refrigeration unit may be formed into a thin structure. However, the cargo is loaded to make sure to form the air flow passage between the lower surface of the refrigeration unit and the cargo loaded below the lower surface to guide air inside the compartment toward the air suction port formed in the lower surface of the refrigeration unit. In consideration with the space for forming the air flow passage, the effective loading volumetric capacity which allows actual loading of the cargo cannot be increased as expected.

DE 102 15 272 describes a design for a ceiling of a refrigerated transport vehicle where the ceiling is designed to take into account the refrigeration unit and an associated drip tray.

WO 0065288 describes a transport temperature control unit where the compressor and evaporator assemblies are arranged back-to-back, and positioned outside the conditioned space.

### BRIEF SUMMARY OF THE INVENTION

It is an object of the present invention to provide a transportation refrigeration unit which allows the air suction port to be sufficiently enlarged, prevents the dew condensation water or water liquefied from the frost from drapping down to the cargo, and increases the effective loading volumetric capacity of the cargo.

The transportation refrigeration unit according to the present invention is structured as follows.

The transportation refrigeration unit is provided with at least an evaporator and a blower fan disposed in a unit body which is suspended from a ceiling of a cooling compartment. A portion of the unit body has a double-layer structure in a direction of a thickness of the unit, one layer of which is formed as an air suction passage and the other layer is formed as an air blow passage. The blower fan for sucking air from the air suction passage so as to blow said air to the air blow passage is disposed between the air suction passage and the air blow passage. An air suction port communicated with the air suction passage is disposed on one side surface of the unit body.

In the present invention, the unit body with a double-layer structure includes the air suction passage and the air blow passage having the blower fan disposed therebetween. As the air suction port communicated with the air suction passage is formed in one side surface of the unit body, which has sufficiently large opening area while maintaining the thin structure of the unit body, it is possible to reduce the air suction resistance, and to suppress deterioration in the performance and capability caused by the deposited frost resulting from adhered ice crystals of water content of air around the air suction port, which may reduce the opening area of the air suction port or partially seal the air suction port. The flow passage for guiding the air inside the compartment to the air suction port does not have to be formed at the lower portion of the unit body. This makes it possible to load the cargo so that it is adjacent to the lower surface of the unit body as close as possible, thus increasing the effective loading volumetric capacity of the cooling compartment. As the unit body has the double-layer structure, and the air suction port is provided on one side surface of the unit body, the dew condensation water generated inside the unit body mainly upon defrosting, or water liquefied from the frost deposited around the air suction port may be prevented from dropping downward of the unit as the drain water. This makes it possible to prevent the drain water from deteriorating the quality of the cargo or damaging the cargo.

In the transportation refrigeration unit according to the present invention, the evaporator may be disposed downstream of the air suction passage and the air blow passage which form the double-layer structure.

In the unit structure of so called pusher type, the evaporator is disposed upstream of the air suction passage and the air blow passage which form the double-layer structure. Accordingly the installation area of the drain pan disposed below the evaporator may be limited to the relatively narrow region so as to reduce the size of the drain pan. This makes it possible to simplify the unit structure as well as to decrease the costs.

In the transportation refrigeration unit according to the present invention, the evaporator may be disposed upstream of the air suction passage and the air blow passage which form the double-layer structure.

In the aforementioned unit structure of puller type, the evaporator is disposed upstream of the air suction passage and the air blow passage which form the double-layer structure. The upstream side of the evaporator may be used for the air suction passage. Accordingly, the opening area of the air suction port may be maximized to reduce the flow passage resistance at the air suction side as low as possible to reduce the intake pressure loss. Deterioration in the performance owing to the frost adhesion around the air suction port may be suppressed.

In the transportation refrigeration unit as described above, the blower fan may be formed of a turbo fan rotatably disposed around a vertical axis, the intake opening of the turbo fan being opposite an opening formed in a partition wall between the air suction passage and the air blow passage which form the double-layer structure.

In the above-described structure, the blower fan is formed as the turbo fan rotatably disposed in the opening formed in the partition wall between the air suction passage and the air blow passage around the vertical axis opposite the air suction port. The use of the thin structured turbo fan with the relatively small axial dimension allows the double-layer structure to be maintained thin, and the air flow passage structure to be simplified. The transportation refrigeration unit with the thin and simple structure, thus, may be obtained.

In the transportation refrigeration unit, the air suction port may be disposed on a rear side surface of the unit body opposite an air blow port formed on a front side surface of the unit body.

In the structure, the air suction port is formed in the rear side surface of the unit body opposite the air blow port formed in the front side surface of the unit body. In the cooling compartment, the air blow port is directed to the inside of the cooling compartment, and the air suction port is disposed adjacent to the side wall surface inside the cooling compartment (adjacent to the front wall surface of the cooling compartment in case of the refrigerator vehicle).
Accordingly, the air circulation within the cooling compartment may be brought into the optimum state where no short-circuit occurs, thus uniformly cooling the inside of the compartment. If water liquefied from the frost deposited around the air suction port is dropped by any chance, the influence on the cargo may be minimized as least as possible.

In the transportation refrigeration unit, the air suction port may have an opening with a maximum allowable area conforming to regulations and safety requirements.

In the above-described structure, the opening area of the air suction port may be set to the maximum allowable value conforming to the relevant regulations and safety requirements. This makes it possible to reduce the air suction resistance as low as possible, and to prevent the frost from being deposited around the air suction port. If the frost is brought into the state to be adhered and deposited around the air suction port by any chance, such disadvantages as sealing of the air suction port with the frost and reduction in the air flow rate may be avoided. This makes it possible to suppress the deterioration in performance and capability of the refrigeration unit due to the frost, resulting in an improved reliability.

In the transportation refrigeration unit, a lower panel which forms an outermost case of the unit body is disposed on a lower surface of the unit body, and the lower panel may be formed to have a drain pan shape.

In the above-described structure, the lower panel as the outermost case of the unit body is formed into a drain pan shape on the lower surface of the unit body. The structure allows the drain pan shaped lower panel to receive the dew condensation water or the water liquefied from the frost in almost all the portions in the unit body upon defrosting. Accordingly, the dew condensation water or the water liquefied from the frost may be prevented from dropping to the lower portion of the unit as the drain water, thus making sure to protect the cargo from deterioration in quality and damage.

In the transportation refrigeration unit, the lower panel may be fixed to a structure which forms the unit body via a flat fastener attached to an inner side surface of the panel.

In the structure, the lower panel is fixed to the structure which forms the unit body via the flat fastener (so called Velcro fastener or magic tape as registered trademarks) on the inner surface of the panel. The lower surface of the unit body may be formed into a flat surface having no protruding head of a fixture bolt or screw from the outer surface (surface opposite the outside) of the lower panel. This makes it possible to improve the outer appearance as well as prevent the cargo from being damaged by the head of the bolt or the screw in contact therewith. The cargo is allowed to be loaded adjacent to the lower surface of the refrigeration unit as close as possible thereto.

In the present invention, the air suction port is formed in one side surface of the unit body to have its opening area large enough to reduce the air suction resistance. This also makes it possible to suppress deterioration in the performance or capability of the unit owing to reduction of the opening area of the air suction port or partial sealing thereof caused by the ice crystal formed from water content of air adhered to the air suction port, which becomes frost deposited to be grown therearound. As the air passage for guiding the air inside the compartment to the air suction port does not have to be formed on the lower side of the unit body, the cargo may be loaded to a level adjacent to the lower surface of the unit body as close as possible to said surface. Accordingly, the effective loading volumetric capacity of the cargo may further be increased. The dew condensation water generated inside the unit body or the water liquefied from the frost deposited around the air suction port may be prevented from dropping downward from the air suction port to the unit as the drain water. This makes it possible to prevent the drain water from deteriorating the quality of the cargo or damaging the cargo.

### BRIEF DESCRIPTION OF THE SEVERAL VIEWS OF THE DRAWINGS

Fig. 1 is a view of an outer appearance of a refrigeration vehicle provided with the refrigeration unit according to the first embodiment of the present invention.
Fig. 2 is a vertical sectional view schematically showing the structure of the refrigeration unit shown in Fig. 1.
Fig. 3 is a perspective view of an outer appearance of the refrigeration unit shown in Fig. 1 when viewed from the rear side.
Fig. 4A is a partially broken side view of the refrigeration unit shown in Fig. 1 when viewed from the front. Fig. 4B is a bottom view of the refrigeration unit shown in Fig. 1.
Fig. 5 is an explanatory view showing the positional relationship between the refrigeration unit shown in Fig. 1 and the cargo to be loaded.
Fig. 6 is a vertical sectional view schematically showing the structure of the refrigeration unit according to a second embodiment of the present invention.

### DETAILED DESCRIPTION OF THE INVENTION

Embodiments according to the present invention will be described referring to the drawings.

### First Embodiment

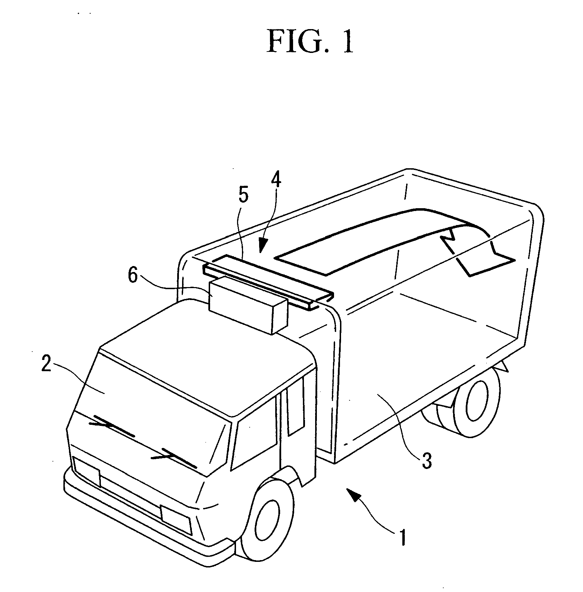

A first embodiment according to the present invention will be described referring to Figs. 1 to 5.

Fig. 1 is a perspective view of the outer appearance of the refrigeration vehicle provided with the transportation refrigeration unit according to the first embodiment of the present invention. A refrigeration vehicle 1 includes a cooling compartment 3 trailed by a cabin 2. The cooling compartment 3 includes a refrigeration unit (transportation refrigeration unit) 4 for the cold storage of the cargo loaded inside the cooling compartment 3.

The refrigeration unit 4 is separated into a refrigeration unit (which may be referred to as a cooling unit or an evaporator unit) 5 disposed inside the cooling compartment 3 and a condensing unit 6 disposed outside the cooling compartment 3. Both units are connected with a coolant pipe which forms the known refrigeration cycle. The refrigeration unit which is suspended from the ceiling inside the cooling compartment 3 selected from various types of units may be employed as the refrigeration unit 5. The condensing unit 6 fixed to the upper portion of the front surface wall of the cooling compartment 3 may be employed as the example of the condensing unit 6.

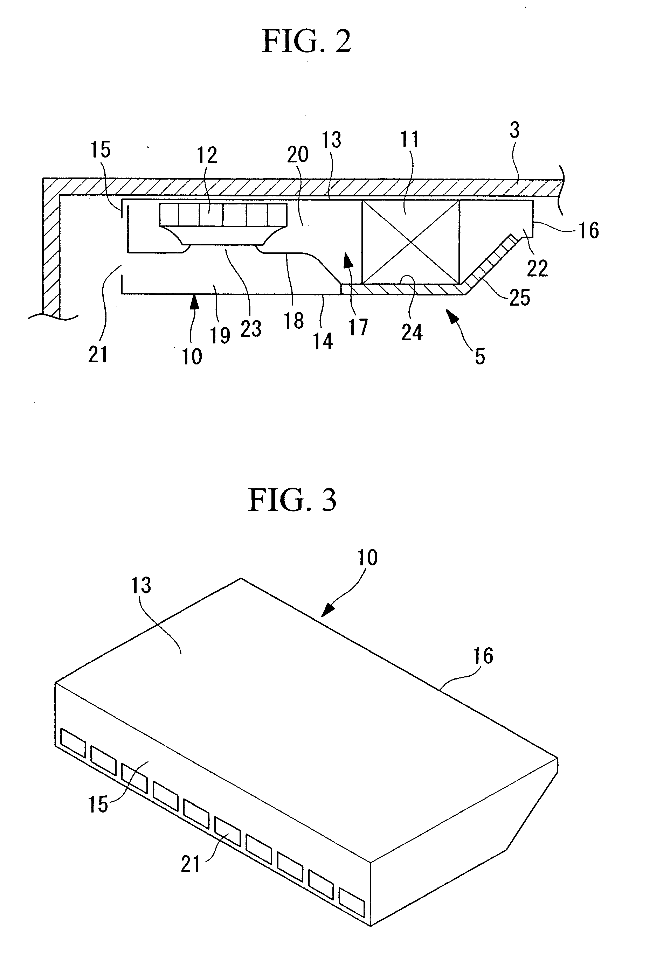

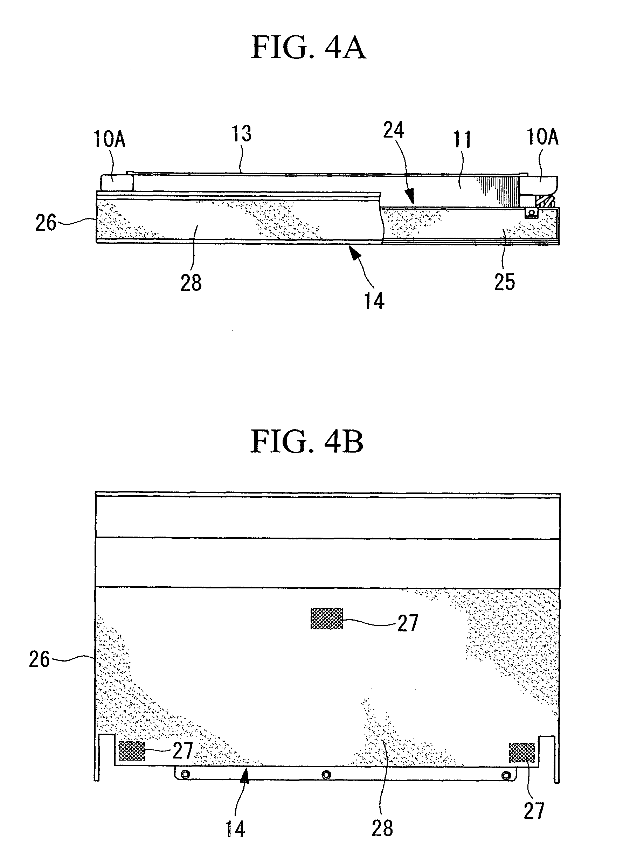

Fig. 2 is a view schematically showing the sectional structure of the refrigeration unit 5. Fig. 3 is a perspective view illustrating the outer appearance of the refrigeration unit 5 when viewed from the rear side. The refrigeration unit 5 includes a thin rectangular solid unit body 10 with the small dimension in the thickness direction. The unit body 10 includes at least an evaporator 11 and a blower fan 12 for circulating the air inside the cooling compartment 3 to the evaporator 11, both of which form the refrigerating cycle. The unit body 10 is provided with a frame 10A (see Figs. 4A and 4B) as the framework. The unit body 10 is formed by assembling an upper panel 13, a lower panel (ornamental panel) 14 and the like for forming the upper surface, the lower surface and the side surface with the frame 10A.

An air flow passage 17 is formed inside the unit body 10 from the rear side surface 15 to the front side surface 16. The rear portion of the air flow passage 17 is separated into a double-layer structure including upper and lower layers with a partition wall 18 in the direction of the unit thickness. The lower layer of the double-layer structure serves as an air suction passage 19, and the upper layer serves as an air blow passage 20. The air suction passage 19 is communicated with the air blow port 21 which opens to the rear side surface of the unit body 10. The air blow passage 20 is communicated with an air blow port 22 which is opened to the front side surface of the unit body 10. The air suction port 21 has the opening area set to the maximum allowable value conforming to the relevant regulations and safety requirements.

A circular opening 23 is formed in the partition wall 18 such that the blower fan 12 is disposed opposite the opening 23 between the air suction passage 19 and the air blow passage 20. A thin turbo fan with a reduced axial dimension is employed as the blower fan 12. The turbo fan (blower fan) 12 is disposed rotatably around the vertical axis to suck the air flowing through the air suction passage 19, and the air is blown radially through the air blow passage 20.

A heat exchanger of plate fin and tube type is employed as the evaporator 11. The evaporator 11 is disposed downstream of the double-layer structure of the air flow passage 17 to form the refrigeration unit 5 of so called pusher type where the air blown from the blower fan 12 is fed to the evaporator 11. A drain pan 24 which receives the drain water generated by the evaporator 11 is disposed therebelow via an insulator material 25.

The lower panel (ornamental panel) 14 which forms the outermost case of the unit body 10 is formed into the drain pan shape with a rise-up plane 26 therearound as shown in Figs. 4A and 4B so as to receive the dew condensation water generated in the respective portions of the unit body 10 and water liquefied from the frost upon defrosting, thus preventing dropping of the drain water from the unit body 10. Flat fasteners (Velcro fastener ™ or magic tape ™) 27 are attached to a plurality of points (three points in the embodiment) on the inner surface of the lower panel 14. The lower panel 14 may be fixed to the frame 10A as the framework of the unit body 10 via the flat fasteners 27. An insulation material 28 for preventing the dew condensation is applied to the entire outer surface of the lower panel as shown by the shading in Figs. 4A and 4B.

The thus structured embodiment is operated to provide the following effects.

When the transportation refrigeration unit 4 is operated, the known low temperature/low pressure coolant is circulated to the evaporator 11 of the refrigeration unit 5 to drive the blower fan 12 simultaneously. Then the air inside the cooling compartment 3 is circulated within the refrigeration unit 5. The heat is exchanged between the air inside the compartment and the coolant in the evaporator 11 to cool the air inside the compartment. As the cooled air is blown from the refrigeration unit 5 into the cooling compartment 3, the inside of the cooling compartment 3 may be cooled to the set temperature.

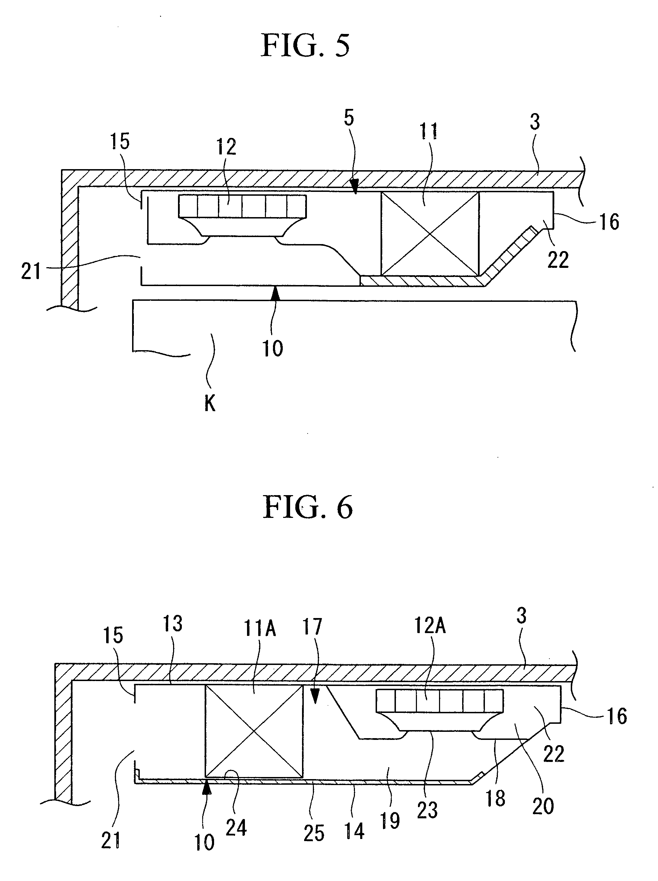

Referring to Figs. 2 and 5, the refrigeration unit 5 has the rear side surface 15 suspended from the ceiling surface adjacent to the front wall of the cooling compartment 3. The air rising along the front wall of the cooling compartment 3 is sucked into the unit body 10 through the air suction port 21 which is opened in the rear side surface 15. The air is then fed into the air suction passage 19 formed as the lower layer of the double-layer structure, and further sucked into the blower fan (turbo fan) 12 via the opening 23 formed in the partition wall 18. The air boosted by the blower fan 12 is radially blown from the blower fan 12 to the air blow passage 20, and then cooled while passing the evaporator 11 disposed downstream of the blower fan 12. The thus cooled air is blown from the air blow port 22 opened to the front side surface 16 of the unit body 10, and is fed into the cooling compartment 3 for cooling the cargo K loaded therein.

The refrigeration unit 5 is structured to suck the air which has been blown from the air blow port 22 formed in the front side surface 16 to the rear of the cooling compartment 3 to circulate from the rear upper portion to the lower portion, and further to the front portion to return along the front wall surface in the cooling compartment 3 from the air suction port 21 opened in the rear side surface 15 again. This makes it possible to bring the air circulation inside the cooling compartment 3 into the optimum state where no short-circuit occurs. This makes it possible to cool the inside of the cooling compartment 3 substantially uniformly.

The unit body 10 has the double-layer structure including the upper layer as the air blow passage 20 and the lower layer as the air suction passage 19, and has the blower fan 12 therebetween. The air suction port 21 communicated with the air suction passage 19 is formed in the rear side surface 15 of the unit body 10. The air suction port 21 may be formed in the rear side surface of the unit body 10 with sufficiently large opening area while maintaining the thin structure of the unit body 10. This makes it possible to reduce the air suction resistance as well as suppress deterioration in the performance or capacity owing to reduction of the opening area of the air suction port 21 or partial sealing thereof caused by adhesion of water content of air formed into the ice crystal and further to the frost deposited around the air suction port 21.

As the air suction port 21 has the maximum allowable opening area conforming to the relevant regulations and safety requirements, the air suction resistance may be reduced as low as possible. As adhesion of the frost around the air suction port 21 may be suppressed, the air suction port 21 is not sealed with the frost or the air flow rate is not decreased if the frost adheres around the air suction port 21 by any chance. This makes it possible to suppress deterioration in the cooling performance owing to the frost, thus improving the reliability. As a turbo fan with a thin structure is employed as the blower fan 12, the air flow passage as the double-layer structure may be maintained thin. Furthermore, the air flow passage structure with respect to the blower fan 12 may be simplified.

As the air suction port 21 and the air blow port 22 are formed in the rear side surface 15 and the front side surface 16 of the unit body 10, respectively, the air flow passage (space) for guiding the intake air to the lower portion of the unit body 10 is not required. This makes it possible to allow the cargo K to be loaded to a level adjacent to the lower surface of the unit body 10 as close as possible. The effective loading volumetric capacity of the cargo K in the cooling compartment 3 may be increased. As the lower panel 14 which forms the unit body 10 is fixed to the frame 10A with the flat fasteners 27 on the inner side, the lower surface of the unit body 10 may be formed to be flat having no head of the fixation bolt or the screw protruding therefrom. The cargo K may be loaded up to such a level as to be substantially in contact with the lower surface of the refrigeration unit 5 while being kept from the damage in contact with the protruding head of the bolt or the screw. Furthermore, as there is no protruding head of a bolt or a screw, the outer appearance may be improved, and the insulator material 28 may be easily applied.

As the unit body 10 has the double-layer structure having the entire lower surface covered with the lower panel 14 with no opening, and formed as the drain pan shape including the rise-up plane 26 therearound, the lower panel 14 receives the drain water as the dew condensation water generated in the respective portions of the unit body 10 or water liquefied from the frost deposited around the air suction port 21 generated upon defrosting. This makes it possible to suppress dropping of the drain water from the air suction port 21 down to the unit body 10. Deterioration in the quality of the cargo K or damage to said cargo due to such drain water may thus be prevented. Especially, as the air suction port 21 is formed in the rear side surface 15 of the unit body 10, if the frost adhered around the air suction port 21 is liquefied into water to drop downward by any chance, the contact between the cargo K and such water may be kept as least as possible, thus minimizing the damage to the cargo as clearly shown by Fig. 5.

As the evaporator 11 has the pusher structure which is disposed downstream of the blower fan 12, the drain pan 24 to be disposed below the evaporator 11 may be located in the relatively narrow lower region below the evaporator 11. This makes it possible to reduce the size of the drain pan 24. The unit structure may be simplified, the manufacturing costs may be reduced, and the consumption amount of the insulator material 24 may also be decreased.

### Second Embodiment

A second embodiment of the present invention will be described referring to Fig. 6.

The embodiment is substantially the same as the first embodiment except the arrangement structure of the evaporator 11A and the blower fan 12A. The rest of the structure is the same as that of the first embodiment, and the explanation thereof will thus be omitted.

In the embodiment, the double-layer structure of the air flow passage 17 is disposed in the front side of the unit body 10. In the unit structure of so called puller type, the evaporator 11A is disposed upstream of the double-layer structure with respect to the blower fan 12A disposed therein, that is, upstream of the blower fan 12A. In the aforementioned case, the drain pan 24A disposed below the evaporator 11A is provided to cover substantially the entire area of the air suction passage 19 via the insulator material 25.

Unlike the first embodiment, in the aforementioned puller type structure, the evaporator 11A is disposed at the suction side of the blower fan 12A which is structured to blow the cooled air which has passed the evaporator 11A. However, the embodiment provides the same effects as those derived from the first embodiment. The use of the puller structure allows all the upstream side of the evaporator 11A to be used as the air suction passage, there is substantially no limitation to form the opening as the air suction port 21. The opening area of the air suction port 21 may be maximized to reduce the passage resistance at the air suction side as low as possible to decrease the intake pressure loss. The opening area of the air suction port 21 is increased to further suppress the deterioration in the performance owing to adhesion of the frost around the air suction port 21.

It is to be understood that the present invention is not limited to the aforementioned embodiments, but may be modified without departing from the scope of the present invention. For example, the number of the blower fan 12 is not limited to one, but plural units of blower fans 12 may be employed in accordance with the size of the unit. The arbitrary type of the blower fan 12 may be employed as long as the unit is made thin and allows to feed the required air flow rate. Therefore, the cross flow fan and the like with the smaller outer diameter may be employed instead of the turbo fan. In the aforementioned embodiments, the lower layer and the upper layer of the double-layer structure are formed as the air suction passage 19 and the air blow passage 20, respectively. However, the upper layer and the lower layer may be formed as the air suction passage 19 and the air blow passage 20.

## Claims

1. A transportation refrigeration unit with at least an evaporator (11) and a
blower fan (12) disposed in a unit body (10) which is suspended from a ceiling of a cooling compartment (3), whereby the blower fan (12) for sucking air from an air suction passage (19) so as to blow said air to an air blow passage (20) is disposed between the air suction passage (19) and the air blow passage (20); and an air suction port (21) communicates with the air suction passage (19) and is disposed on a rear side surface of the unit body (10) opposite an air blow port (22) formed on a front side surface (16) of the unit body (10) and communicates with the air blow passage (20) **characterized in that**:
a portion of the unit body (10) is configured as a thin rectangular solid unit body with a smallest dimension in thickness direction, the rear portion of the air flow passage (17) being separated into a double-layer structure including upper and lower layers with a partition wall (18) in the direction of the unit thickness, the lower layer of the double-layer structure forming the air suction passage (19), and the upper
layer forming the air blow passage (20);

2. The transportation refrigeration unit according to claim 1, wherein the evaporator (11) is disposed downstream of the air suction passage (19) and the air blow passage (20) which form the double-layer structure.

3. The transportation refrigeration unit according to claim 1, wherein the evaporator (11) is disposed upstream of the air suction passage (19) and the air blow passage (20) which form the double-layer structure.

4. The transportation refrigeration unit according to any one of claims 1 to 3, wherein the blower fan (12) is formed of a turbo fan rotatably disposed around a vertical axis, the intake opening of the turbo fan being opposite an opening (23) formed in a partition wall (18) between the air suction passage (19) and the air blow passage (20) which form the double-layer structure.

5. The transportation refrigeration unit according to any one of claims 1 to 4, wherein the air suction port (21) has an opening with a maximum allowable area conforming to regulations and safety requirements.

6. The transportation refrigeration unit according to any one of claims 1 to 5, wherein a lower panel (14) which forms an outermost case of the unit body is disposed on a lower surface of the unit body (10), and the lower panel (14) is formed to have a drain pan shape.

7. The transportation refrigeration unit according to claim 6, wherein the lower panel (14) is fixed to a structure which forms the unit body via a flat fastener (27) attached to an inner side surface of the panel (14).

## Patentansprüche

1. Transportkühleinheit mit wenigstens einem Verdampfer (11) und einem Gebläse (12), die in einem Körper (10) der Einheit angeordnet sind, der an einer Decke eines Kühlabteils (3) aufgehängt ist,
wobei das Gebläse (12) zum Ansaugen von Luft aus einem Luftansaugdurchgang (19) zwischen einem Luftansaugdurchgang (19) und dem Luftausblasdurchgang (20) angeordnet ist, um die Luft in den Luftausblasdurchgang (20) zu blasen, und
ein Luftansauganschluss (21) mit dem Luftansaugdurchgang (19) verbunden und an einer rückwärtigen Oberfläche des Körpers (10) der Einheit gegenüber einem Luftausblasanschluss (22) angeordnet ist, der auf einer vorderseitigen Oberfläche (16) des Körpers (10) der Einheit ausgebildet ist und der mit dem Luftausblasdurchgang (20) verbunden ist,
**dadurch gekennzeichnet, dass**
ein Abschnitt des Körpers (10) der Einheit als ein rechteckiger fester Körper der Einheit ausgebildet ist, dessen kleinste Abmessungen in Dickenrichtung liegen, der rückwärtige Abschnitt eines Luftstromdurchgangs (17) in eine Doppelschichtstruktur unterteilt ist, die obere und untere Schichten mit einer Trennwand (18) in der Richtung der Dicke der Einheit umfasst, wobei die untere Schicht der Doppelschichtstruktur den Luftansaugdurchgang (19) bildet und die obere Schicht den Luftausblasdurchgang (20) bildet.

2. Transportkühleinheit nach Anspruch 1, wobei der Verdampfer (11) stromabwärts von dem Luftansaugdurchgang (19) und dem Luftausblasdurchgang (20), die die Doppelschichtstruktur ausbilden, angeordnet ist.

3. Transportkühleinheit nach Anspruch 1, wobei der Verdampfer (11) stromaufwärts von dem Luftansaugdurchgang (19) und dem Luftausblasdurchgang (20), die die Doppelschichtstruktur ausbilden, angeordnet ist.

4. Transportkühleinheit nach einem der Ansprüche 1 bis 3, wobei das Gebläse (12) mit einem Turbogebläse ausgebildet ist, das um eine vertikale Achse drehbar angeordnet ist, wobei die Aufnahmeöffnung des Turbogebläses gegenüber einer Öffnung (23) liegt, die in einer Trennwand (18) zwischen dem Luftansaugdurchgang (19) und dem Luftausblasdurchgang (20), die die Doppelschichtstruktur ausbilden, ausgebildet ist.

5. Transportkühleinheit nach einem der Ansprüche 1 bis 4, wobei der Luftansauganschluss (21) eine Öffnung mit einer in Übereinstimmung mit Vorschriften und Sicherheitsanforderungen maximal erlaubten Fläche aufweist.

6. Transportkühleinheit nach einem der Ansprüche 1 bis 5, wobei ein unteres Feld (14), das ein äußerstes Gehäuse des Körpers der Einheit ausbildet, an einer unteren Oberfläche des Körpers (10) der Einheit angeordnet ist, und das untere Feld (14) so ausgebildet ist, dass es eine Ablaufwannenform aufweist.

7. Transportkühleinheit nach Anspruch 6, wobei das untere Feld (14) an einer Struktur, die den Körper der Einheit ausbildet, mittels eines flachen Befestigungsmittels (27) befestigt ist, das an einer innerseitigen Oberfläche des Feldes (14) befestigt ist.

## Revendications

1. Unité de réfrigération de transport avec au moins un évaporateur (11) et un ventilateur de soufflerie (12) disposés dans un corps d'unité (10) qui est suspendu au plafond d'un compartiment de refroidissement (3), dans laquelle le ventilateur de soufflerie (12) destiné à aspirer de l'air d'un passage d'aspiration d'air (19) de façon à souffler ledit air dans un passage de soufflage d'air (20) est disposé entre le passage d'aspiration d'air (19) et le passage de soufflage d'air (20) ; et un orifice d'aspiration d'air (21) communique avec le passage d'aspiration d'air (19) et est disposé sur une surface du côté arrière du corps d'unité (10) opposée à un orifice de soufflage d'air (22) formé sur une surface du côté avant (16) du corps d'unité (10) et communique avec le passage de soufflage d'air (20), **caractérisée en ce que** :
une partie du corps d'unité (10) est configurée sous la forme d'un corps d'unité solide rectangulaire mince d'unité avec une dimension la plus petite dans la direction d'épaisseur, la partie arrière du passage d'écoulement d'air (17) étant séparée en une structure à double couche comprenant des couches supérieure et inférieure avec une paroi de séparation (18) dans la direction de l'épaisseur d'unité, la couche inférieure de la structure à double couche formant le passage d'aspiration d'air (19), et la couche supérieure formant le passage de soufflage d'air (20).

2. Unité de réfrigération de transport selon la revendication 1, dans laquelle l'évaporateur (11) est disposé en aval du passage d'aspiration d'air (19) et le passage de soufflage d'air (20) qui forment la structure à double couche.

3. Unité de réfrigération de transport selon la revendication 1, dans laquelle l'évaporateur (11) est disposé en amont du passage d'aspiration d'air (19) et du passage de soufflage d'air (20) qui forment la structure à double couche.

4. Unité de réfrigération de transport selon l'une quelconque des revendications 1 à 3, dans laquelle le ventilateur de soufflerie (12) est formé par une turbine disposée de façon rotative autour d'un axe vertical, l'ouverture d'admission de le la turbine étant opposée à une ouverture (23) formée dans une paroi de séparation (18) entre le passage d'aspiration d'air (19) et le passage de soufflage d'air (20) qui forment la structure à double couche.

5. Unité de réfrigération de transport selon l'une quelconque des revendications 1 à 4, dans laquelle l'orifice d'aspiration d'air (21) a une ouverture avec une section maximale admissible se conformant aux règles et aux exigences de sécurité.

6. Unité de réfrigération de transport selon l'une quelconque des revendications 1 à 5, dans laquelle un panneau inférieur (14) qui forme une enveloppe la plus à l'extérieur du corps d'unité est disposé sur une surface inférieure du corps d'unité (10), et le panneau inférieur (14) est formé de façon à avoir une forme de coupelle.

7. Unité de réfrigération de transport selon la revendication 6, dans laquelle le panneau inférieur (14) est fixé sur une structure qui forme le corps d'unité par l'intermédiaire d'un élément de fixation plat (27) fixé sur une surface latérale intérieure du panneau (14).
